# EUROPEAN PATENT APPLICATION

(11) **EP 3 453 573 A1**
(43) Date of publication of application: **13.03.2019**
(21) Application number: 17792549.2
(22) Date of filing: 27.04.2017
(51) Int. Cl.: B60R 11/02, B60K 37/02, B60K 35/00

(54) **DECORATIVE SYSTEM FOR VEHICLE INTERIORS**

(30) Priority: 02.05.2016 ES 201630568
(71) Applicant: Eurogroup Belcaire, S.L., 46930 Quart de Poblet (ES)
(72) Inventor: PIRTLE, Erik Lee, 46930 Quart De Poblet (ES)
(74) Representative: Polo Montañes, Carlos
(86) International application number: PCT/ES2017/070258
(87) International publication number: WO 2017/191344

(57) **Abstract**

The invention relates to a decorative system based on providing very thin flexible screens on the inner surface of the passenger compartment of a motor vehicle, e.g. on the dashboard, central column, doors, etc., which screens adapt to the appearance of the vehicle and are touch sensitive, said screens being connected to control software such that they can display different contents, e.g. images, information relating to the vehicle, or simply imitate different types of vehicle finishes or materials.

## Description

### OBJECT OF THE INVENTION

The present invention relates to a decorative system for vehicle interiors, applicable to any part or area of a vehicle interior, particularly and conventionally to the "inner trim," preferably of an automobile, based on flexible screens which are capable of adapting to the appearance of the vehicle interior and of allowing the display of different images and information.

### BACKGROUND OF THE INVENTION

The decoration of vehicle interiors has logically evolved over time, and it adapts to the new types of materials, designs, and demands required by consumers at a given time.

In that sense, the decoration of motor vehicle interiors has drawn on different types of materials, starting with fabrics, and including wood and metals, even leather and technical plastics, among others, which are arranged in combination in a very different ways or configurations to always achieve the highest comfort and aesthetic quality in the interior of the passenger compartment.

However, these designs are "immovable," so users may eventually become bored with them, such that changing these designs usually entails a cost which, in most cases, is not worth the effort nor is it justified.

On the other hand, in vehicles of this type it is increasingly more necessary to have means in which different data or information can be displayed, such as data relating to the vehicle, multimedia files, etc., and which in the best case scenario are achieved, besides through the conventional vehicle instruments, by means of a central screen on the dashboard, with only the driver or, in a best case scenario, the front seat passenger having access to said screen, but in no case will the back seat passengers have access to it.

### DESCRIPTION OF THE INVENTION

The proposed system solves in a fully satisfactory manner the drawbacks discussed above in each and every one of the discussed aspects.

More specifically, the system of the invention allows not only establishing a new concept in the interior decoration of an automobile or vehicle, but also allows, based on the use of very thin flexible screens which allow viewing image files of any type, showing photos, videos, information, as well as setting up communications of any type, or simply offering a number of vehicle surface finishes, simulating different materials, which can be modified any time that it may be required, through the images output on said screens.

Therefore, the decorative system is based on each part or area of the interior of the passenger compartment of the vehicle incorporates on the surface thereof a flexible screen which, when duly connected by means of the corresponding wiring connected to a microprocessor, which will be connected to the control electronics of the vehicle, allows access from any part of the interior of the vehicle itself in a touch sensitive manner, and thereby viewing photos, videos, information, etc.

Furthermore, the screen or screens applied on the surface of the interior passenger compartment of the vehicle incorporate sensors that can take the driver's vital signs, so that the screens may provide a warning with light and even sound signals if, for example, the driver is falling asleep or has any other type of affliction.

The screens constituting the decorative system can be LED screens, LCD screens, liquid crystal screens, etc., and they may be applicable to both rear and front doors, the dashboard, on the driving wheel, in the intermediate central part defined between the front seats, as well as in the rear part of the actual passenger compartment of the vehicle.

So not only does the present invention establish a novel decorative system in vehicle interiors, but rather said decorative system, based on flexible screens and the corresponding control electronics, allows viewing and loading any type of multimedia files, where they can be accessed in a touch sensitive manner from any part of the vehicle.

### DESCRIPTION OF THE DRAWINGS

To complement the description that will be provided below and for the purpose of helping to better understand the features of the invention according to a preferred practical embodiment thereof, a drawing is attached as an integral part of said description, in which the following is depicted in an illustrative and non-limiting manner:

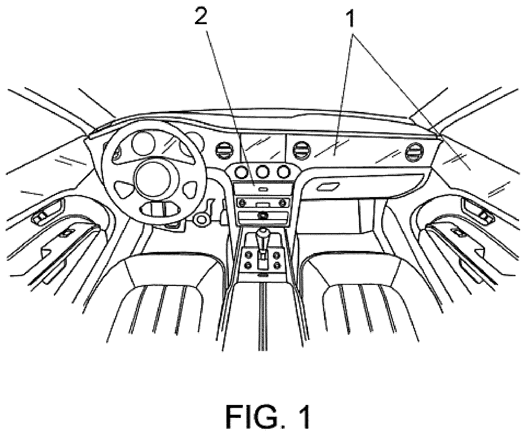

Figure 1 shows a perspective view of a vehicle interior in which a decorative system for vehicle interiors, carried out according to the object of the present invention, has been installed.

### PREFERRED EMBODIMENT OF THE INVENTION

In view of the discussed figure, it can be seen how the proposed decorative system is based on the fact that one or more flexible screens (1) are included in the interior of the passenger compartment of a vehicle, being adapted to the appearance of the interior of said vehicle, which screens (1) will be touch sensitive so as to enable accessing the control thereof, where any type of information, photos, videos, etc., may be displayed.

In the figure that is shown, and as stated above, the flexible screens (1), which are duly powered by internal wiring, can occupy different areas of the dashboard (2), as well as of the doors, of the rear part of the vehicle, or even the roof, since screens of this type can be fitted to different surfaces or parts that are usually covered with wood, plastic, carbon fiber, metal, or other common materials.

## Claims

1. Decorative system for vehicle interiors, **characterized in that** it consists of one or more flexible screens which are arranged on and fitted to the inner surface of the passenger compartment of a vehicle, e.g. on the dashboard, central column, doors, or any other part of the interior thereof, which screens are touch sensitive, and being connected to control software such that they can display different contents, e.g. images, data, information relating to the vehicle, or any multimedia file.

2. Decorative system for vehicle interiors according to claim 1, **characterized in that** it optionally includes driver vital sign sensors which are connected to software used to output warnings depending on the data obtained through the screens participating in the system.

3. Decorative system for vehicle interiors according to claim 1, **characterized in that** the flexible screens are LED, LCD, liquid crystal, or other flexible screens.
